# EUROPEAN PATENT APPLICATION

(11) **EP 4 760 845 A1**
(43) Date of publication of application: **17.06.2026**
(21) Application number: 24865404.8
(22) Date of filing: 09.09.2024
(51) Int. Cl.: H01M 10/0525, H01G 11/26, H01G 11/60, H01G 11/62, H01M 4/36, H01M 4/587, H01M 10/0567

(54) **NON-AQUEOUS ELECTROLYTE POWER STORAGE ELEMENT**

(30) Priority: 12.09.2023 JP 2023147608
(71) Applicant: GS Yuasa International Ltd., Kisshoin, Minami-ku, Kyoto-shi, Kyoto 601-8520 (JP)
(72) Inventor: TAKANO, Masashi, Kyoto-shi, Kyoto 601-8520 (JP); OHSUGI, Yuta, Kyoto-shi, Kyoto 601-8520 (JP); MIZUTA, Yusuke, Kyoto-shi, Kyoto 601-8520 (JP); MATSUYOSHI, Tsubasa, Kyoto-shi, Kyoto 601-8520 (JP); FURUYA, Yasuyuki, Kyoto-shi, Kyoto 601-8520 (JP)
(74) Representative: Isarpatent
(86) International application number: PCT/JP2024/032230
(87) International publication number: WO 2025/057904

(57) **Abstract**

A non-aqueous electrolytic solution energy storage device according to one aspect of the present invention includes: an electrode body including a positive electrode and a negative electrode; a non-aqueous electrolytic solution; and a container accommodating therein the electrode body and the non-aqueous electrolytic solution, in which: the positive electrode includes a positive electrode active material layer containing a positive electrode active material; the negative electrode includes a negative electrode active material layer containing a negative electrode active material; the positive electrode active material contains a tungsten element; the negative electrode active material contains graphite; the non-aqueous electrolytic solution contains a first additive having a reductive decomposition potential of 1.5 V (vs. Li/Li⁺) or more; and a ratio (A1/B) of an amount of substance (A1) of the first additive contained in the non-aqueous electrolytic solution to a surface area (B) of the negative electrode active material layer is 2.0×10⁻⁷ mol/m² or more.

## Description

### TECHNICAL FIELD

The present invention relates to a non-aqueous electrolytic solution energy storage device.

### BACKGROUND ART

Non-aqueous electrolytic solution secondary batteries, whose typical examples are lithium-ion secondary batteries, are often used in electronic devices such as personal computers and communication terminals, automobiles, and the like, owing to their high energy density. Generally, the non-aqueous electrolytic solution secondary battery includes: a pair of electrodes electrically isolated from each other by a separator; and a non-aqueous electrolytic solution interposed between the electrodes, and is configured to be charged and discharged by transfer of charge-transporting ions between the two electrodes. As non-aqueous electrolytic solution energy storage devices other than the non-aqueous electrolytic solution secondary batteries, capacitors such as lithium-ion capacitors, electric double layer capacitors, or the like have also been widely used.

As a positive electrode active material for a non-aqueous electrolytic solution energy storage device, a lithium-transition metal composite oxide, a polyanion compound, or the like is used. In order to improve performance of the non-aqueous electrolytic solution energy storage device, various elements may be added to the positive electrode active material. Patent Literature 1 describes a non-aqueous electrolyte secondary battery using a lithium-nickel-cobalt-manganese composite oxide containing tungsten and niobium as the positive electrode active material.

### CITATION LIST

### Patent Literature

Patent Literature 1: Japanese Unexamined Patent Application Publication No. 2009-140787

### DISCLOSURE OF INVENTION

### PROBLEMS TO BE SOLVED BY THE INVENTION

By making the positive electrode active material contain a tungsten element, it is possible to achieve an advantage that an initial input of the non-aqueous electrolytic solution energy storage device is improved. However, in a non-aqueous electrolytic solution energy storage device for which a positive electrode active material containing the tungsten element is used, an input of the non-aqueous electrolytic solution energy storage device after having been stored in a high-temperature environment is likely to be decreased. The input refers to energy (W) that can be taken in per unit time during charge. That is, an input being large means that electric power (W) that can be taken in during the charge is large. In some cases, the input being large may be referred to as being excellent in input performance. When an input retention rate is high, a decrease in the input, more specifically, a decrease in the input performance is enabled to be suppressed.

An object of the present invention is to provide a non-aqueous electrolytic solution energy storage device for which a positive electrode active material containing a tungsten element is used, and whose input retention rate exhibited after storage in a high-temperature environment is high.

### MEANS FOR SOLVING THE PROBLEMS

A non-aqueous electrolytic solution energy storage device according to one aspect of the present invention includes: an electrode body including a positive electrode and a negative electrode; a non-aqueous electrolytic solution; and a container accommodating therein the electrode body and the non-aqueous electrolytic solution, in which: the positive electrode includes a positive electrode active material layer containing a positive electrode active material; the negative electrode includes a negative electrode active material layer containing a negative electrode active material; the positive electrode active material contains a tungsten element; the negative electrode active material contains graphite; the non-aqueous electrolytic solution contains a first additive having a reductive decomposition potential of 1.5 V (vs. Li/Li⁺) or more; and a ratio (A1/B) of an amount of substance (A1) of the first additive contained in the non-aqueous electrolytic solution to a surface area (B) of the negative electrode active material layer is 2.0×10⁻⁷ mol/m² or more.

### EFFECT OF THE INVENTION

According to one aspect of the present invention, it is possible to provide a non-aqueous electrolytic solution energy storage device for which a positive electrode active material containing a tungsten element is used, and whose input retention rate exhibited after storage in a high-temperature environment is high.

### BRIEF DESCRIPTION OF DRAWINGS

FIG. 1 is a see-through perspective view illustrating an embodiment of a non-aqueous electrolytic solution energy storage device.
FIG. 2 is a schematic view illustrating an embodiment of an energy storage apparatus which is configured by assembling a plurality of non-aqueous electrolytic solution energy storage devices.

### DESCRIPTION OF EMBODIMENTS

First, an outline of a non-aqueous electrolytic solution energy storage device disclosed in the present specification will be described.
(1) A non-aqueous electrolytic solution energy storage device according to one aspect of the present invention includes: an electrode body including a positive electrode and a negative electrode; a non-aqueous electrolytic solution; and a container accommodating therein the electrode body and the non-aqueous electrolytic solution, in which: the positive electrode includes a positive electrode active material layer containing a positive electrode active material; the negative electrode includes a negative electrode active material layer containing a negative electrode active material; the positive electrode active material contains a tungsten element; the negative electrode active material contains graphite; the non-aqueous electrolytic solution contains a first additive having a reductive decomposition potential of 1.5 V (vs. Li/Li⁺) or more; and a ratio (A1/B) of an amount of substance (A1) of the first additive contained in the non-aqueous electrolytic solution to a surface area (B) of the negative electrode active material layer is 2.0×10⁻⁷ mol/m² or more.

The non-aqueous electrolytic solution energy storage device according to (1) described above is a non-aqueous electrolytic solution energy storage device for which a positive electrode active material containing a tungsten element is used, and an input retention rate of the non-aqueous electrolytic solution energy storage device after having been stored in a high-temperature environment is high. Although the reason for causing the above is not clarified, the following factors are presumed. When a non-aqueous electrolytic solution energy storage device for which a positive electrode active material containing a tungsten element is used is stored in a high-temperature environment, the tungsten element is eluted from the positive electrode active material into a non-aqueous electrolytic solution, and the eluted tungsten element is deposited on a surface of a negative electrode active material layer. As a result, it is considered that resistance of the negative electrode increases, and the input of the non-aqueous electrolytic solution energy storage device decreases. In view of the above, such measures are taken to make the non-aqueous electrolytic solution contain the first additive having the reductive decomposition potential of 1.5 V (vs. Li/Li⁺) or more, and set the ratio (A1/B) of the amount of substance (A1) of the first additive to the surface area (B) of the negative electrode active material layer to 2.0×10⁻⁷ mol/m² or more. Accordingly, even when the non-aqueous electrolytic solution energy storage device is being stored in a high-temperature environment, a coating formed on the surface of the negative electrode active material layer by a reaction of the first additive can be maintained sufficiently. By virtue of such a coating, it is considered that a decrease in the input caused by deposition of the tungsten element on the surface of the negative electrode active material layer is suppressed.

The above "graphite" refers to a carbon material in which average interplanar spacing (d₀₀₂) of a plane (002) determined by an X-ray diffraction method is 0.33 nm or more but less than 0.34 nm before the graphite is subjected to charge and discharge or in a discharged state. Here, the "discharged state" of a carbon material means a state in which a discharge is performed such that lithium ions, which can be occluded and released during charge and discharge, are sufficiently released from the carbon material serving as the negative electrode active material. For example, in a half-cell in which a negative electrode containing a carbon material as the negative electrode active material is used as a working electrode and metal lithium is used as a counter electrode, the "discharged state" refers to the state in which an open circuit voltage is 0.6 V or more.

In the present invention, the "reductive decomposition potential" means a potential (vs. Li/Li⁺) at a reduction peak (a reduction peak of the most noble potential observed at a first cycle) confirmed from a result of measurement by a cyclic voltammetry (CV) method. It is assumed that the CV method is carried out under the following measurement conditions.

### [Measurement Conditions]

Working electrode: graphite
Reference electrode: Li metal
Solvent composition: EC:EMC = 3:7 (volume ratio)
Electrolyte salt: LiPF₆ (1 mol/dm³)
Temperature: room temperature
Scanning speed: 1 mV/sec
Number of scans: 3 cycles
Scanning range: 0 V (vs. Li/Li⁺) to 3.0 V (vs. Li/Li⁺)

The "amount of substance of the first additive contained in the non-aqueous electrolytic solution" is intended as the amount of substance of the first additive which is contained in the non-aqueous electrolytic solution that the non-aqueous electrolytic solution energy storage device includes, and does not represent the amount of substance (the so-called feed value) of the first additive contained in a non-aqueous electrolytic solution for use in manufacturing the non-aqueous electrolytic solution energy storage device. The non-aqueous electrolytic solution energy storage device according to one embodiment of the present invention is completed by way of an initial charge and discharge and an aging treatment performed thereafter. A part of the first additive which is contained in a non-aqueous electrolytic solution for use in the manufacturing is decomposed during the initial charge and discharge and the aging treatment performed thereafter and forms a coating on the surface of the negative electrode active material layer. Therefore, while the amount of substance of the first additive contained in the non-aqueous electrolytic solution for use in manufacturing the non-aqueous electrolytic solution energy storage device and the amount of substance of the first additive, which is contained in the non-aqueous electrolytic solution of the non-aqueous electrolytic solution energy storage device completed by way of the initial charge and discharge and the like, are not irrelevant, these amounts of substances are not the same as each other. In other words, the "amount of substance of the first additive contained in the non-aqueous electrolytic solution" refers to the amount of substance of the first additive remaining in the non-aqueous electrolytic solution of the non-aqueous electrolytic solution energy storage device. The same applies to an "amount of substance of a second additive contained in the non-aqueous electrolytic solution" which will be described later.

The "amount of substance of the first additive contained in the non-aqueous electrolytic solution" is measured by a method as described below. The same applies to the "amount of substance of a second additive contained in the non-aqueous electrolytic solution" which will be described later. A mass (X1) of the non-aqueous electrolytic solution energy storage device is measured. After that, the non-aqueous electrolytic solution energy storage device is disassembled, and the non-aqueous electrolytic solution is collected. All components other than the non-aqueous electrolytic solution are washed with dimethyl carbonate and then sufficiently vacuum-dried. A mass (X2) of all components other than the non-aqueous electrolytic solution after vacuum drying is measured. A difference between the mass (X1) and the mass (X2) is assumed as a mass (X3) of the non-aqueous electrolytic solution accommodated in the container of the non-aqueous electrolytic solution energy storage device. All of the operations from the disassembly of the non-aqueous electrolytic solution energy storage device to the measurement of the mass of all components other than the non-aqueous electrolytic solution after vacuum drying are performed in a dry air atmosphere having a dew point of less than or equal to -30 °C. Meanwhile, a concentration (mass%) of the first additive in the non-aqueous electrolytic solution is obtained by ion chromatography analysis (IC analysis) or gas chromatography-mass spectrometry (GC-MS analysis) by using the non-aqueous electrolytic solution collected at the time of disassembly. When the first additive is an ionic compound such as a salt, a concentration obtained by the IC analysis is adopted. When the first additive is a non-ionic compound, a concentration obtained by the GC-MS analysis is adopted. A mass (X4) of the first additive contained in the non-aqueous electrolytic solution is calculated from the concentration of the first additive in the non-aqueous electrolytic solution and the mass (X3) of the non-aqueous electrolytic solution. The amount of substance (A1) of the first additive contained in the non-aqueous electrolytic solution is obtained by dividing the mass (X4) of the first additive contained in the non-aqueous electrolytic solution by a molecular weight of the first additive.

### [IC Analysis]

Specifically, the IC analysis is performed in the order of a qualitative analysis and a quantitative analysis described below. As an apparatus for the IC-analysis, a "Dionex ICS-5000+" manufactured by Thermo Fisher Scientific Inc. is used. Water is used as an eluent.

### (Qualitative analysis)

A measurement sample (a non-aqueous electrolytic solution) is subjected to the IC analysis. Constituents contained in the measurement sample are predicted from a peak position of each peak of the obtained ion chromatogram. A known sample containing constituents that are predicted (hereinafter referred to as "predicted constituents") is subjected to the IC analysis. A retention time of a peak corresponding to the predicted constituent of the measurement sample is compared with a retention time of a peak of the known sample containing the predicted constituent, and if these retention times match with each other, it is estimated that the above prediction is correct.

### (Quantitative analysis)

The quantitative analysis is performed by a calibration curve method. First, a known sample containing the predicted constituents, whose concentration is known, is subjected to the IC analysis, and a peak area is obtained, thereby preparing a calibration curve. The calibration curve is prepared such that a coefficient of determination (r²) takes a value that is 0.999 or more and 1 or less. A content of the predicted constituent in the measurement sample is obtained from the calibration curve and the peak area of the predicted constituent of the measurement sample. The operation as described above is performed for all of the peaks detected in the IC analysis of the measurement sample, and the content of each of the predicted constituents is obtained.

### [GC-MS Analysis]

Specifically, the GC-MS analysis is performed in the order of a qualitative analysis and a quantitative analysis described below. As an apparatus for the GC-MS analysis, a "5975C" manufactured by Agilent Technologies, Inc. is used. Argon is used as a carrier gas.

### (Qualitative analysis)

A measurement sample (a non-aqueous electrolytic solution) is subjected to the GC-MS analysis. Constituents contained in the sample are predicted from an MS spectrum of each peak of the obtained gas chromatogram. A known sample containing the predicted constituents is subjected to the GC-MS analysis. A retention time and the MS spectrum of a peak corresponding to the predicted constituent of the measurement sample are compared with a retention time and the MS spectrum of a peak of the known sample containing the predicted constituent, and if these retention times and the MS spectra match with each other, it is estimated that the above prediction is correct.

### (Quantitative analysis)

The quantitative analysis is performed by a calibration curve method. First, a known sample containing the predicted constituents, whose concentration is known, is subjected to the GC-MS analysis, and a peak area is obtained, thereby preparing a calibration curve. The calibration curve is prepared such that a coefficient of determination (r²) takes a value that is 0.999 or more and 1 or less. A content of the predicted constituent in the measurement sample is obtained from the calibration curve and the peak area of the predicted constituent of the measurement sample. The operation as described above is performed for all of the peaks detected in the GC-MS analysis of the measurement sample, and the content of each of the predicted constituents is obtained.

The "surface area of the negative electrode active material layer" refers to the area of all surfaces, also taking into consideration the surfaces of voids and the like in the negative electrode active material layer, and is measured by a method as described below. All of the negative electrode active material layers in a predetermined range are collected from the negative electrode of the non-aqueous electrolytic solution energy storage device that has been disassembled, washed, and then vacuum-dried, in measuring the above-described "amount of substance of the first additive contained in the non-aqueous electrolytic solution". The mass per unit area of the negative electrode active material layer is obtained by measuring the mass of the collected negative electrode active material layers. A mass (Y) of the negative electrode active material layer is obtained from the mass per unit area of the negative electrode active material layer and the area of the negative electrode active material layer provided on the negative electrode. The "area of the negative electrode active material layer provided on the negative electrode" mentioned herein is defined as an area of a portion opposed to the positive electrode active material layer directly or via a separator. Meanwhile, a portion of the negative electrode active material layer that has not been used for obtaining the mass (Y) of the negative electrode active material layer is collected, and BET specific surface area measurement by a nitrogen adsorption method is performed for that portion. This measurement is performed by an "autosorb iQ" manufactured by Quantachrome Instruments. Five points are extracted from a region of the acquired adsorption isotherm where P/P0 is from 0.06 to 0.3 (P/P0 = 0.06 to 0.3) to perform BET plotting, and the BET specific surface area is calculated from the y-intercept and the slope of the plotted straight line. The surface area (B) of the negative electrode active material layer is obtained as a product of the BET specific surface area of the negative electrode active material layer and the mass (Y) of the negative electrode active material layer. All of the operations from the disassembly of the non-aqueous electrolytic solution energy storage device to the collection of the negative electrode active material layers are performed in a dry air atmosphere having a dew point of less than or equal to -30 °C.

(2) In the non-aqueous electrolytic solution energy storage device according to (1) described above, the ratio (A1/B) may be 5.0×10⁻⁶ mol/m² or less.

When the ratio (A1/B) is large, the amount of the first additive contained in the non-aqueous electrolytic solution for use in manufacturing the non-aqueous electrolytic solution energy storage device also tends to be large. Therefore, according to the non-aqueous electrolytic solution energy storage device described in (2) above, formation of a coating having an excessive thickness due to the first additive is suppressed, for example, whereby an initial input can be increased, for example.

(3) In the non-aqueous electrolytic solution energy storage device according to (1) or (2) described above, the graphite may be natural graphite.

Natural graphite has higher crystallinity than artificial graphite. Therefore, according to the non-aqueous electrolytic solution energy storage device described in (3) above, a discharge capacity per mass of the negative electrode active material increases, and the input exhibited at the initial stage and after storage in a high-temperature environment also tends to increase.

Natural graphite is a general term for graphite obtained from natural resources. Natural graphite may be graphite in which, in an X-ray diffraction pattern obtained by using a CuKα ray that is measured before charge and discharge or in a discharged state of the graphite, four peaks appear when a diffraction angle 2θ is in a range of 40° to 50°. These four peaks are considered to be two peaks derived from a hexagonal structure and two peaks derived from a rhombohedral structure. In the case of artificial graphite, generally, it is considered that only two peaks derived from the hexagonal structure appear. In the X-ray diffraction pattern, a ratio ((012)/(100)) of a peak intensity derived from a (012) plane to a peak intensity derived from a (100) plane is preferably not less than 0.3, and more preferably not less than 0.4. The above-mentioned peak intensity ratio ((012)/(100)) is preferably not greater than 0.6. Here, the (100) plane is derived from a hexagonal structure, and the (012) plane is derived from a rhombohedral structure.

(4) In the non-aqueous electrolytic solution energy storage device according to any one of (1) to (3) described above, the non-aqueous electrolytic solution may contain a second additive having a reductive decomposition potential of 0.6 V (vs. Li/Li⁺) or more but less than 1.5 V (vs. Li/Li⁺).

According to the non-aqueous electrolytic solution energy storage device described in (4) above, since the second additive forms a coating on the surface of the negative electrode active material layer together with the first additive, the input retention rate exhibited after storage in a high-temperature environment is further increased. In addition, since the second additive forms the coating on the surface of the negative electrode active material layer together with the first additive, an even stronger coating is formed, so that a reaction with the electrolytic solution can be suppressed. Accordingly, a capacity retention rate exhibited after storage in a high-temperature environment is further increased.

(5) In the non-aqueous electrolytic solution energy storage device according to (4) described above, a ratio (A2/B) of an amount of substance (A2) of the second additive contained in the non-aqueous electrolytic solution to the surface area (B) of the negative electrode active material layer may be 5.0×10⁻⁶ mol/m² or more and 1.0×10⁻⁵ mol/m² or less.

According to the non-aqueous electrolytic solution energy storage device described in (5) above, since the amount of the second additive with respect to the surface area of the negative electrode active material layer is appropriate, at least one of the input retention rate or the capacity retention rate exhibited after storage in a high-temperature environment (preferably both) is further increased.

(6) In the non-aqueous electrolytic solution energy storage device according to (4) or (5) described above, a ratio (A1/A2) between the amount of substance (A1) of the first additive and the amount of substance (A2) of the second additive contained in the non-aqueous electrolytic solution may be 0.05 or more and 1 or less.

According to the non-aqueous electrolytic solution energy storage device described in (6) above, the ratio of the amount of the first additive to the amount of the second additive is appropriate, and a coating having a particularly favorable composition may be formed. Therefore, at least one of the input retention rate or the capacity retention rate exhibited after storage in a high-temperature environment (preferably both) is further increased.

A non-aqueous electrolytic solution energy storage device, an energy storage apparatus, and a method for manufacturing a non-aqueous electrolytic solution energy storage device according to one embodiment of the present invention, and other embodiments of the present invention will be described in detail. The names of constituent members (constituent elements) used in the embodiments may be different from the names of constituent members (constituent elements) used in the background art.

### <Non-aqueous Electrolytic Solution Energy Storage Device>

A non-aqueous electrolytic solution energy storage device (hereinafter also simply referred to as an "energy storage device") according to one embodiment of the present invention includes: an electrode body including a positive electrode, a negative electrode, and a separator; a non-aqueous electrolytic solution; and a container for accommodating therein the electrode body and the non-aqueous electrolytic solution. The electrode body is usually a stacked type in which a plurality of positive electrodes and a plurality of negative electrodes are stacked with separators interposed therebetween, or a wound type in which a positive electrode and a negative electrode are wound in such a state that they are stacked with a separator interposed therebetween. At least a part of the non-aqueous electrolytic solution is present in such a state of being impregnated into the positive electrode, the negative electrode, and the separator. Some part of the non-aqueous electrolytic solution may be present as an excess electrolytic solution outside the electrode body, in other words, between the electrode body and the container. The container may be, for example, a metal container made of aluminum, stainless steel, or the like, or a resin container. As an example of the non-aqueous electrolytic solution energy storage device, a non-aqueous electrolytic solution secondary battery (hereinafter also simply referred to as a "secondary battery") will be described.

### (Positive electrode)

The positive electrode includes a positive electrode substrate and a positive electrode active material layer which is disposed on the positive electrode substrate directly or via an intermediate layer.

The positive electrode substrate has conductivity. Whether or not the positive electrode substrate has "conductivity" is determined on the basis of a volume resistivity measured in conformity with JIS H 0505:1975, with 10⁻² Ω·cm being assumed as a threshold value. As the material of the positive electrode substrate, a metal such as aluminum, titanium, tantalum, or stainless steel, or an alloy thereof is used. Among the above, aluminum or an aluminum alloy is preferable from the standpoint of potential resistance, high conductivity, and cost. Examples of the positive electrode substrate include a foil, a vapor-deposited film, a mesh, and a porous material, and a foil is preferable from the standpoint of cost. Therefore, an aluminum foil or an aluminum alloy foil should preferably be used for the positive electrode substrate. As the aluminum or aluminum alloy, A1085, A3003, and A1N30, for example, specified in JIS H 4000:2014 or JIS H 4160:2006 are exemplified.

An average thickness of the positive electrode substrate is preferably 3 µm or more and 50 µm or less, more preferably 5 µm or more and 40 µm or less, still more preferably 8 µm or more and 30 µm or less, and particularly preferably 10 µm or more and 25 µm or less. When the average thickness of the positive electrode substrate is set to be within the above range, an energy density per volume of the non-aqueous electrolytic solution energy storage device can be increased while increasing the strength of the positive electrode substrate.

The intermediate layer is a layer which is disposed between the positive electrode substrate and the positive electrode active material layer. As the intermediate layer contains a conductive agent such as carbon particles, contact resistance between the positive electrode substrate and the positive electrode active material layer is reduced. A configuration of the intermediate layer is not particularly limited, and contains, for example, a binder and a conductive agent.

The positive electrode active material layer contains a positive electrode active material. The positive electrode active material layer contains, as necessary, optional ingredients such as a conductive agent, a binder, a thickener, and a filler.

The positive electrode active material contains a tungsten element. The tungsten element may be present, for example, in a state of a compound such as an oxide (WO₃). A compound containing the tungsten element may cover, for example, at least a part of a surface of particles of a substance capable of occluding and releasing charge-transporting ions such as lithium ions. In other words, the positive electrode active material may contain a substance capable of occluding and releasing charge-transporting ions and a compound containing the tungsten element. The positive electrode active material may be a material substantially composed of only a substance capable of occluding and releasing charge-transporting ions and a compound containing the tungsten element. The substance capable of occluding and releasing charge-transporting ions itself may contain the tungsten element. The tungsten element may be present, for example, on the surface of the particles of the positive electrode active material. The tungsten element may be present inside the particles of the positive electrode active material. As described above, since the positive electrode active material contains the tungsten element, a side reaction at the positive electrode can be suppressed, and conductivity of the charge-transporting ions such as lithium ions can be improved. As a result, the initial input and the like of the non-aqueous electrolytic solution energy storage device can be increased. Examples of a method of incorporating the tungsten element into the positive electrode active material include a method of coating the surface of particles of a substance capable of occluding and releasing charge-transporting ions with a compound containing the tungsten element. Further, another example includes a method of adding the tungsten element at the time of synthesizing a substance capable of occluding and releasing charge-transporting ions and then performing sintering, thereby causing a compound containing the tungsten element to be supported on the surface of the particles of the positive electrode active material or contained within the particles. As the positive electrode active material containing the tungsten element, a commercially available product may be used.

As the substance capable of occluding and releasing charge-transporting ions, substances capable of occluding and releasing lithium ions are preferable, and a conventionally known material can be used as such substances. Examples of the substance include lithium-transition metal composite oxides having an α-NaFeO₂-type crystal structure, lithium-transition metal composite oxides having a spinel-type crystal structure, polyanion compounds, chalcogen compounds, and sulfur. Examples of the lithium-transition metal composite oxides having the α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1, 0 < 1-x-y), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1, 0 < 1-x-y), Li[LiₓNi_{γ}Mn_{β}Co_{(1-x-γ-β)}]O₂ (0 ≤ x < 0.5, 0 < γ, 0 < β, 0.5 < γ+β < 1, 0 < 1-x-γ-β), and Li[LiₓNi_{γ}Co_{β}Al_{(1-x-γ-β)}]O₂ (0 ≤ x < 0.5, 0 < y, 0 < β, 0.5 < γ+β < 1, 0 < 1-x-γ-β). Examples of the lithium-transition metal composite oxides having the spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogen compounds include titanium disulfide, molybdenum disulfide, and molybdenum dioxide. Atoms or polyanions in these materials may be partially substituted with atoms or anion species of other elements. One of these materials may be used alone, or two or more of these materials may be mixed and used.

As the substance capable of occluding and releasing charge-transporting ions, among the above-mentioned materials, lithium-transition metal composite oxides are preferable, and lithium-transition metal composite oxides having the α-NaFeO₂-type crystal structure are more preferable, in which Li[LiₓNi_{γ}Mn_{β}Co_{(1-x-y-β)}]O₂ (0 ≤ x < 0.5, 0 < γ, 0 < β, 0.5 < γ+β < 1, 0 < 1-x-γ-β) is further preferable. In the Li[LiₓNi_{γ}Mn_{β}Co_{(1-x-γ-β)}]O₂, for example, it is preferable that γ and β should be 0.1 ≤ γ < 0.9 and 0.1 ≤ β < 0.9. When such a substance is used, the advantageous effect of enabling to improve the input by the tungsten element is particularly sufficiently exhibited.

The positive electrode active material should preferably further contain a transition metal element other than the tungsten element. In a case where a lithium-transition metal composite oxide, a polyanion compound, or the like is used as the substance capable of occluding and releasing charge-transporting ions, the positive electrode active material further contains a transition metal element other than the tungsten element. Examples of the transition metal element other than the tungsten element include a nickel element, a manganese element, a cobalt element, and an iron element. The positive electrode active material should preferably contain at least one element selected from the group consisting of a nickel element, a manganese element, and a cobalt element, and should more preferably contain a nickel element, a manganese element, and a cobalt element. A content of the tungsten element relative to all of the transition metal elements other than the tungsten element in the positive electrode active material is preferably 0.2 mol% or more and 3 mol% or less, and more preferably 0.5 mol% or more and 2 mol% or less. When the content of the tungsten element is set to be not less than the above-described lower limit, the advantageous effect brought about by the tungsten element in the positive electrode active material is sufficiently exhibited, and the initial input and the like are further increased. Meanwhile, when the content of the tungsten element is set to be not more than the above-described upper limit, a discharge capacity can be increased, for example.

The positive electrode active material is usually in the form of particles (powder). An average particle size of the positive electrode active material should preferably be, for example, 0.1 µm or more and 20 µm or less. When the average particle size of the positive electrode active material is set to be not less than the above-described lower limit, the positive electrode active material is easily manufactured or handled. When the average particle size of the positive electrode active material is set to be not more than the above-described upper limit, electron conductivity of the positive electrode active material layer is improved. When a composite of a positive electrode active material and another material is used, the average particle size of the composite is assumed as the average particle size of the positive electrode active material. The "average particle size" refers to a value indicating 50% in a volume-based cumulative size distribution calculated according to JIS Z 8819-2:2001 on the basis of a particle size distribution measured by a laser diffraction and scattering method applied to a diluted solution in which particles are diluted with a solvent according to JIS Z 8825:2013.

In order to obtain powder having a predetermined particle size, a pulverizer, a classifier, or the like, is used. Examples of a method of pulverization include a method using a mortar, a ball mill, a sand mill, a vibrating ball mill, a planetary ball mill, a jet mill, an opposed jet mill, a spiral jet mill, a sieve, or the like. In performing the pulverization, wet pulverization in which water or an organic solvent such as hexane is present can also be used. As a method of classification, a sieve, an air classifier, or the like, is used as necessary in both a dry method and a wet method.

A content of the positive electrode active material in the positive electrode active material layer is preferably 50% by mass or more and 99% by mass or less, more preferably 70% by mass or more and 98% by mass or less, and still more preferably 80% by mass or more and 95% by mass or less. When the content of the positive electrode active material is set to be within the above range, both high energy density and manufacturability of the positive electrode active material layer can be achieved.

The conductive agent is not particularly limited as long as it is a material having conductivity. Examples of such a conductive agent include carbon materials, metals, and conductive ceramic. Examples of the carbon materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and Ketjen black. Examples of the graphene-based carbon include graphene, carbon nanotubes (CNTs), and fullerene. Examples of the shape of the conductive agent include a powdery form and a fibrous form. As the conductive agent, one of these materials may be used alone, or two or more of these materials may be mixed and used. Moreover, these materials may be composited and used. For example, a composite material of carbon black and a CNT may be used. Among the above, carbon black is preferable and acetylene black is particularly preferable from the standpoint of electron conductivity and coatability.

A content of the conductive agent in the positive electrode active material layer is preferably 1% by mass or more and 10% by mass or less, and more preferably 3% by mass or more and 9% by mass or less. When the content of the conductive agent is set to be within the above range, the energy density of the non-aqueous electrolytic solution energy storage device can be increased.

Examples of the binder include thermoplastic resins such as fluororesins (e.g. polytetrafluoroethylene (PTFE) and polyvinylidene fluoride (PVDF)), polyethylene, polypropylene, polyacrylate, and polyimide; elastomers such as ethylene-propylene-diene rubber (EPDM), sulfonated EPDM, styrene-butadiene rubber (SBR), and fluororubber; and polysaccharide polymers.

A content of the binder in the positive electrode active material layer is preferably 0.5% by mass or more and 10% by mass or less, and more preferably 1% by mass or more and 9% by mass or less. When the content of the binder is set to be within the above range, the positive electrode active material can be stably held.

Examples of the thickener include polysaccharide polymers such as carboxymethyl cellulose (CMC) and methyl cellulose. When the thickener has a functional group that reacts with lithium or the like, this functional group may be deactivated in advance by methylation or the like.

A content of the thickener in the positive electrode active material layer may be, for example, 0.1% by mass or more and 6% by mass or less, or may be 0.5% by mass or more and 3% by mass or less. The content of the thickener in the positive electrode active material layer may be 1% by mass or less, and it is not necessarily required that the thickener be contained in the positive electrode active material layer.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; and substances derived from mineral resources such as talc, montmorillonite, boehmite, zeolite, apatite, kaolin, mullite, spinel, olivine, sericite, bentonite, and mica or synthetic substances thereof.

A content of the filler in the positive electrode active material layer may be, for example, 0.1% by mass or more and 8% by mass or less, or may be 0.5% by mass or more and 5% by mass or less. The content of the filler in the positive electrode active material layer may be 3% by mass or less, or may be 1% by mass or less, and it is not necessarily required that the filler be contained in the positive electrode active material layer.

The positive electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, and Nb, as the constituents other than the positive electrode active material, the conductive agent, the binder, the thickener, and the filler.

### (Negative electrode)

The negative electrode includes a negative electrode substrate and a negative electrode active material layer which is disposed on the negative electrode substrate directly or via an intermediate layer. A configuration of the intermediate layer is not particularly limited, and can be selected from the configurations exemplified for the positive electrode, for example.

The negative electrode substrate has conductivity. As the material of the negative electrode substrate, a metal such as copper, nickel, stainless steel, or nickel-plated steel, an alloy thereof, or a carbonaceous material or the like is used. Among the above, copper or a copper alloy is preferable. Examples of the negative electrode substrate include a foil, a vapor-deposited film, a mesh, and a porous material, and a foil is preferable from the standpoint of cost. Therefore, a copper foil or a copper alloy foil should preferably be used for the negative electrode substrate. Examples of the copper foil include a rolled copper foil and an electrolytic copper foil.

An average thickness of the negative electrode substrate is preferably 2 µm or more and 35 µm or less, more preferably 3 µm or more and 30 µm or less, still more preferably 4 µm or more and 25 µm or less, and particularly preferably 5 µm or more and 20 µm or less. When the average thickness of the negative electrode substrate is set to be within the above range, the energy density per volume of the non-aqueous electrolytic solution energy storage device can be increased while increasing the strength of the negative electrode substrate.

The negative electrode active material layer contains a negative electrode active material. The negative electrode active material layer contains, as necessary, optional ingredients such as a conductive agent, a binder, a thickener, and a filler.

The negative electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as the constituents other than the negative electrode active material, the conductive agent, the binder, the thickener, and the filler.

The negative electrode active material contains graphite. The graphite may be natural graphite or artificial graphite, but is preferably natural graphite. When the graphite is natural graphite, a discharge capacity per mass of the negative electrode active material increases, and the input exhibited at the initial stage and after storage in a high-temperature environment also tends to increase.

An average particle size of the graphite is, for example, preferably 1 µm or more and 30 µm or less, and more preferably 3µm or more and 20 µm or less. When the average particle size of the graphite is within the above range, charge and discharge performance of the non-aqueous electrolytic solution energy storage device can be enhanced, for example. In order to obtain graphite having a predetermined particle size, a pulverizer, a classifier, or the like, is used. A method of pulverization and a method of classification can be selected, for example, from the methods exemplified for the positive electrode.

A BET specific surface area of the graphite is preferably 1 m²/g or more and 10 m²/g or less, more preferably 2 m²/g or more and 6 m²/g or less, and still more preferably 3 m²/g or more and 5 m²/g or less. As the BET specific surface area of the graphite is within the above range, good charge and discharge performance can be exhibited, for example.

A content of the graphite in the negative electrode active material layer is preferably 60% by mass or more and 99.5% by mass or less, and more preferably 90% by mass or more and 99% by mass or less. When the content of the graphite is set to be within the above range, not only can both high energy density and manufacturability of the negative electrode active material layer be achieved, but also the input retention rate exhibited after storage in a high-temperature environment can be further increased.

The negative electrode active material may contain a negative electrode active material other than graphite. As the other negative electrode active material, various conventionally known negative electrode active materials can be used. However, the content of the graphite relative to all of the negative electrode active materials contained in the negative electrode active material layer is preferably 90% by mass or more, more preferably 99 % by mass or more, and may be substantially 100% by mass. That is, it is particularly preferable that only graphite should be used as the negative electrode active material. As described above, by mainly using graphite as the negative electrode active material, the input retention rate exhibited after storage in a high-temperature environment can be further increased, for example.

A content of all of the negative electrode active materials in the negative electrode active material layer is preferably 60% by mass or more and 99.5% by mass or less, and more preferably 90% by mass or more and 99% by mass or less. When the content of all of the negative electrode active materials is set to be within the above range, both high energy density and manufacturability of the negative electrode active material layer can be achieved.

The conductive agent, the binder, the thickener, the filler, and the like, which are the optional ingredients of the negative electrode active material layer, can be selected from the materials exemplified for the positive electrode. However, graphite that the negative electrode active material layer contains is excluded from the conductive agent.

A content of the conductive agent in the negative electrode active material layer may be 3% by mass or less or 1% by mass or less, and it is not necessarily required that the conductive agent be contained in the negative electrode active material layer.

A content of the binder in the negative electrode active material layer is preferably 0.5% by mass or more and 5% by mass or less, and more preferably 0.8% by mass or more and 3% by mass or less.

A content of the thickener in the negative electrode active material layer is, for example, preferably 0.1% by mass or more and 6% by mass or less, and more preferably 0.5% by mass or more and 3% by mass or less.

A content of the filler in the negative electrode active material layer may be, for example, 0.1% by mass or more and 8% by mass or less, or may be 0.5% by mass or more and 5% by mass or less. The content of the filler in the negative electrode active material layer may be 3% by mass or less, or may be 1% by mass or less, and it is not necessarily required that the filler be contained in the negative electrode active material layer.

A BET specific surface area of the negative electrode active material layer is preferably 1 m²/g or more and 10 m²/g or less, more preferably 2 m²/g or more and 6 m²/g or less, and still more preferably 3 m²/g or more and 5 m²/g or less. As the BET specific surface area of the negative electrode active material layer is within the above range, good charge and discharge performance can be exhibited, for example. The BET specific surface area of the negative electrode active material layer can be adjusted by the particle size of the negative electrode active material, strength of pressing on the negative electrode active material layer, and the like.

### (Separator)

A separator can be selected as appropriate from known separators. As the separator, for example, a separator formed of only a base material layer, a separator in which a heat-resistant layer containing heat-resistant particles and a binder is formed on one surface or both surfaces of the base material layer, or the like, can be used. Examples of the shape of the base material layer of the separator include a woven fabric, a nonwoven fabric, and a porous resin film. Among these shapes, a porous resin film is preferable from the standpoint of the strength, and a nonwoven fabric is preferable from the standpoint of liquid retainability of the non-aqueous electrolytic solution. As the material of the base material layer of the separator, for example, polyolefins such as polyethylene and polypropylene are preferable from the standpoint of a shutdown function, and polyimide, aramid, and the like, are preferable from the standpoint of oxidative decomposition resistance. A composite material of these resins may be used as the base material layer of the separator.

The heat-resistant particles contained in the heat-resistant layer should preferably have a mass decrease of not more than 5% when heated from room temperature to 500 °C in an air atmosphere at 1 atm, and more preferably have a mass decrease of not more than 5% when heated from the room temperature to 800 °C. Examples of the material in which a mass decrease is not greater than a predetermined amount include inorganic compounds. Examples of the inorganic compounds include oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon and diamond; substances derived from mineral resources such as talc, montmorillonite, boehmite, zeolite, apatite, kaolin, mullite, spinel, olivine, sericite, bentonite, and mica or synthetic substances thereof. As the inorganic compound, each of these substances, whether in its individual form or as a composite, may be used alone, or two or more of these substances may be mixed and used. Among these inorganic compounds, silicon oxide, aluminum oxide, or aluminosilicate is preferable from the standpoint of safety of the non-aqueous electrolytic solution energy storage device.

A porosity of the separator is preferably not greater than 80% by volume from the standpoint of strength, and is preferably not less than 20% by volume from the standpoint of discharge performance. Here, the term "porosity" refers to a value based on volume, and means a value measured by a mercury porosimeter.

As the separator, a polymer gel composed of a polymer and a non-aqueous electrolytic solution may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel brings about an advantageous effect that liquid leakage is suppressed. As the separator, the above-described porous resin film or nonwoven fabric may be used in combination with the polymer gel.

### (Non-aqueous electrolytic solution)

The non-aqueous electrolytic solution contains a non-aqueous solvent, and an electrolyte salt and a first additive that are dissolved in the non-aqueous solvent.

The non-aqueous solvent can be selected as appropriate from known non-aqueous solvents. Examples of the non-aqueous solvent include cyclic carbonates, linear carbonates, carboxylic acid esters, phosphoric acid esters, sulfonic acid esters, ethers, amides, and nitriles. As the non-aqueous solvent, those obtained by substituting a part of hydrogen atoms contained in these compounds with a halogen may be used.

Examples of the cyclic carbonates include ethylene carbonate (EC), propylene carbonate (PC), butylene carbonate (BC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among the above, EC is preferable.

Examples of the linear carbonates include diethyl carbonate (DEC), dimethyl carbonate (DMC), ethyl methyl carbonate (EMC), diphenyl carbonate, trifluoroethyl methyl carbonate, and bis(trifluoroethyl) carbonate. Among the above, EMC is preferable.

As the non-aqueous solvent, a cyclic carbonate or a linear carbonate is preferably used, and using the cyclic carbonate and the linear carbonate in combination is even more preferable. By using the cyclic carbonate, dissociation of the electrolyte salt can be promoted to improve ionic conductivity of the non-aqueous electrolytic solution. By using the linear carbonate, viscosity of the non-aqueous electrolytic solution can be suppressed to be low. When a cyclic carbonate and a linear carbonate are used in combination, the volume ratio of the cyclic carbonate to the linear carbonate (cyclic carbonate: linear carbonate) is preferably, for example, in the range of 5:95 to 50:50.

The electrolyte salt can be selected as appropriate from known electrolyte salts. Examples of the electrolyte salt include a lithium salt, a sodium salt, a potassium salt, a magnesium salt, and an onium salt. Among the above, a lithium salt is preferable.

Examples of the lithium salt include: inorganic lithium salts such as LiPF₆, LiPO₂F₂, LiBF₄, LiClO₄, and LiN(SO₂F)₂; and lithium salts having a halogenated hydrocarbon group such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among the above, inorganic lithium salts are preferable, and LiPF₆, in particular, is preferable.

When LiPF₆ is contained in the non-aqueous electrolytic solution, it is likely that LiPF₆ will react with water that is slightly present in the non-aqueous electrolytic solution to generate hydrogen fluoride (HF). It is considered that the presence of HF in the non-aqueous electrolytic solution promotes the elution of the tungsten element from the positive electrode active material into the non-aqueous electrolytic solution. Therefore, in a case where the non-aqueous electrolytic solution energy storage device using a non-aqueous electrolytic solution containing such a constituent is one embodiment of the present invention, the advantageous effect that the input retention rate exhibited after storage in a high-temperature environment is high is particularly remarkably produced.

A concentration of the electrolyte salt in the non-aqueous electrolytic solution is preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less, at 20 °C and at 1 atm. When the concentration of the electrolyte salt is set to be within the above range, ionic conductivity of the non-aqueous electrolytic solution can be enhanced.

The first additive is a compound having a reductive decomposition potential of 1.5 V (vs. Li/Li⁺) or more. A lower limit of the reductive decomposition potential of the first additive may be 1.6 V (vs. Li/Li⁺). An upper limit of the reductive decomposition potential of the first additive may be, for example, 2.5 V (vs. Li/Li⁺), 2.0 V (vs. Li/Li⁺), or 1.8 V (vs. Li/Li⁺). The reductive decomposition potential of the first additive can be within a range defined by a combination of any of the lower limits described above and any of the upper limits described above.

Examples of the first additive include lithium bis(oxalate)borate (LiBOB: reductive decomposition potential of 1.70 V (vs. Li/Li⁺)) and lithium bis(oxalate)difluorophosphate (LiFOP: reductive decomposition potential of 1.90 V (vs. Li/Li⁺)), in which LiBOB is preferable. The first additive may be a lithium oxalate salt having the reductive decomposition potential of 1.5 V (vs. Li/Li⁺) or more. One kind of first additive or two or more kinds of first additives can be used.

A concentration of the first additive in the non-aqueous electrolytic solution is preferably 0.001% by mass or more and 1% by mass or less, more preferably 0.01% by mass or more and 0.5% by mass or less, and still more preferably 0.02% by mass or more and 0.2% by mass or less.

A lower limit of a ratio (A1/B) of an amount of substance (A1) of the first additive contained in the non-aqueous electrolytic solution to a surface area (B) of the negative electrode active material layer is 2.0×10⁻⁷ mol/m², preferably 3.0×10⁻⁷ mol/m², and more preferably 4.0×10⁻⁷ mol/m², and still more preferably 5.0×10⁻⁷ mol/m². The lower limit of the ratio (A1/B) may be 6.0×10⁻⁷ mol/m², 8.0×10⁻⁷ mol/m², 1.0×10⁻⁶ mol/m², 1.5×10⁻⁶ mol/m², or 2.0×10⁻⁶ mol/m². When the ratio (A1/B) is set to be not less than the above-described lower limit, a coating formed on the surface of the negative electrode active material layer can be maintained sufficiently even when being stored in a high-temperature environment, and the input retention rate can be increased. An upper limit of the ratio (A1/B) is preferably 5.0×10⁻⁶ mol/m², more preferably 4.0×10⁻⁶ mol/m², and still more preferably 3.0×10⁻⁶ mol/m². The upper limit of the ratio (A1/B) may be 2.0×10⁻⁶ mol/m², 1.0×10⁻⁶ mol/m², or 8.0×10⁻⁷ mol/m². When the ratio (A1/B) is set to be not more than the above-described upper limit, the initial input can be increased, for example. The ratio (A1/B) can be within a range defined by a combination of any of the lower limits described above and any of the upper limits described above (provided that the upper limit is greater than the lower limit).

The amount of substance (A1) of the first additive in the non-aqueous electrolytic solution can be adjusted by the amount of non-aqueous electrolytic solution accommodated in a container in manufacturing the non-aqueous electrolytic solution energy storage device (in other words, the non-aqueous electrolytic solution for use in manufacturing the non-aqueous electrolytic solution energy storage device), and the concentration of the first additive in the non-aqueous electrolytic solution to be accommodated, and the like. Also, a part of the first additive is decomposed via an initial charge and discharge executed for the assembled non-aqueous electrolytic solution energy storage device which has not yet been charged and discharged and an aging treatment performed thereafter. Thus, the amount of substance (A1) of the first additive in the non-aqueous electrolytic solution can also be adjusted by the conditions of these operations (for example, the condition of the initial charge and discharge, the temperature and the time of the aging treatment, and the like). The surface area (B) of the negative electrode active material layer can be adjusted by the shape and the amount of the negative electrode active material used, the thickness of the negative electrode active material layer, and the like.

The non-aqueous electrolytic solution should preferably further contain a second additive. The second additive is also usually dissolved in the non-aqueous solvent. The second additive is a compound having a reductive decomposition potential of 0.6 V (vs. Li/Li⁺) or more but less than 1.5 V (vs. Li/Li⁺). An upper limit of the reductive decomposition potential of the second additive may be 1.2 V (vs. Li/Li⁺), 1.0 V (vs. Li/Li⁺), or 0.8 V (vs. Li/Li⁺). The reductive decomposition potential of the second additive can be within a range defined by a combination of the lower limit described above and any of the upper limits described above.

Examples of the second additive include vinylene carbonate (reductive decomposition potential of 0.64 V (vs. Li/Li⁺)), 1,3-propene sultone (reductive decomposition potential of 1.09 V (vs. Li/Li⁺)), pentene glycol sulfate (reductive decomposition potential of 0.95 V (vs. Li/Li⁺)), and 4,4'-bis (2,2-dioxo-1, 3,2-dioxathiolane) (reductive decomposition potential of 0.60 V (vs. Li/Li⁺)), in which vinylene carbonate is preferable. The second additive may be a cyclic carbonate having carbon-carbon unsaturated double bonds in the cyclic structure of the carbonate and having a reductive decomposition potential of 0.6 V (vs. Li/Li⁺) or more but less than 1.5 V (vs. Li/Li⁺). One kind of second additive or two or more kinds of second additives can be used.

A concentration of the second additive in the non-aqueous electrolytic solution is preferably 0.001% by mass or more and 1% by mass or less, more preferably 0.01% by mass or more and 0.5% by mass or less, and still more preferably 0.04% by mass or more and 0.2% by mass or less.

A lower limit of a ratio (A2/B) of an amount of substance (A2) of the second additive contained in the non-aqueous electrolytic solution to the surface area (B) of the negative electrode active material layer may be, for example, 1.0×10⁻⁶ mol/m² or 3.0×10⁻⁶ mol/m², but is preferably 5.0×10⁻⁶ mol/m². An upper limit of the ratio (A2/B) is preferably 1.0×10⁻⁵ mol/m², more preferably 8.0×10⁻⁶ mol/m², and still more preferably 7.0×10⁻⁶ mol/m². When the ratio (A2/B) is within the above range, the input retention rate exhibited after storage in a high-temperature environment can be further increased, for example. The ratio (A2/B) may be within a range defined by a combination of any of the lower limits described above and any of the upper limits described above.

The amount of substance (A2) of the second additive in the non-aqueous electrolytic solution can be adjusted by a method similar to that applied for the amount of substance (A1) of the first additive in the non-aqueous electrolytic solution.

A lower limit of a ratio (A1/A2) of the amount of substance (A1) of the first additive to the amount of substance (A2) of the second additive contained in the non-aqueous electrolytic solution is preferably 0.05, more preferably 0.08, and may be 0.2, 0.3, or 0.4. An upper limit of the ratio (A1/A2) is preferably 1, more preferably 0.9, still more preferably 0.8, yet still more preferably 0.7, and particularly preferably 0.6. When the ratio (A1/A2) is within the above range, the input retention rate exhibited after storage in a high-temperature environment can be further increased, for example. The ratio (A1/A2) may be within a range defined by a combination of any of the lower limits described above and any of the upper limits described above.

The non-aqueous electrolytic solution may contain other additives apart from the non-aqueous solvent, the electrolyte salt, the first additive, and the second additive. One of such other additives may be used alone, or two or more of such other additives may be mixed and used. A content of the other additives contained in the non-aqueous electrolytic solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the mass of the non-aqueous electrolytic solution as a whole.

The shape of the non-aqueous electrolytic solution energy storage device of the present embodiment is not particularly limited, and examples of the non-aqueous electrolytic solution energy storage device include a cylindrical battery, a prismatic battery, a flat-type battery, a coin battery, and a button battery.

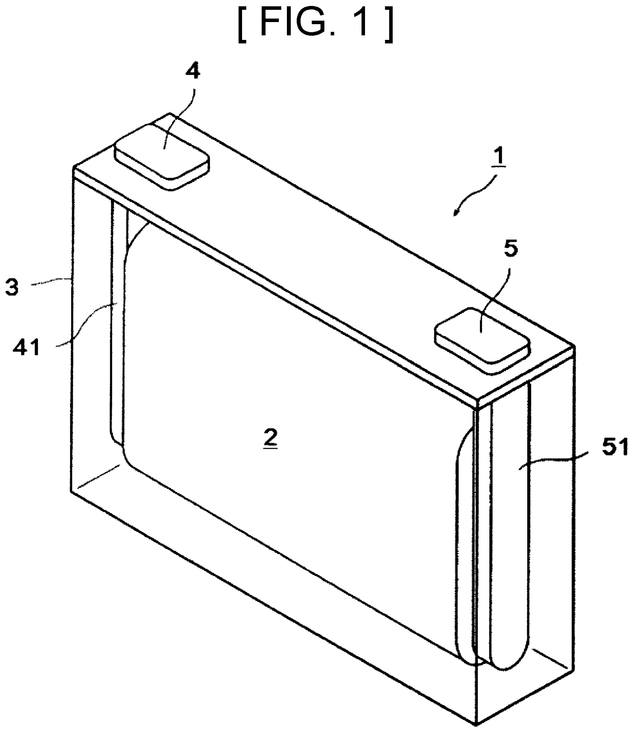

FIG. 1 illustrates a non-aqueous electrolytic solution energy storage device 1 as an example of the prismatic battery. FIG. 1 is a view in which the inside of a container is seen through. An electrode body 2 including a positive electrode and a negative electrode which are wound with a separator interposed therebetween is accommodated in a prismatic container 3. The positive electrode is electrically connected to a positive electrode terminal 4 via a positive electrode lead 41. The negative electrode is electrically connected to a negative electrode terminal 5 via a negative electrode lead 51.

### <Energy Storage Apparatus>

The non-aqueous electrolytic solution energy storage device of the present embodiment can be mounted as an energy storage unit (battery module) configured by assembling a plurality of non-aqueous electrolytic solution energy storage devices in power sources for automobiles such as electric vehicles (EVs), hybrid electric vehicles (HEVs), or plug-in hybrid electric vehicles (PHEVs), power sources for electronic devices such as personal computers or communication terminals, power sources for power storage, or the like. In this case, it is sufficient if the technique of the present invention is applied to at least one non-aqueous electrolytic solution energy storage device included in the energy storage unit.

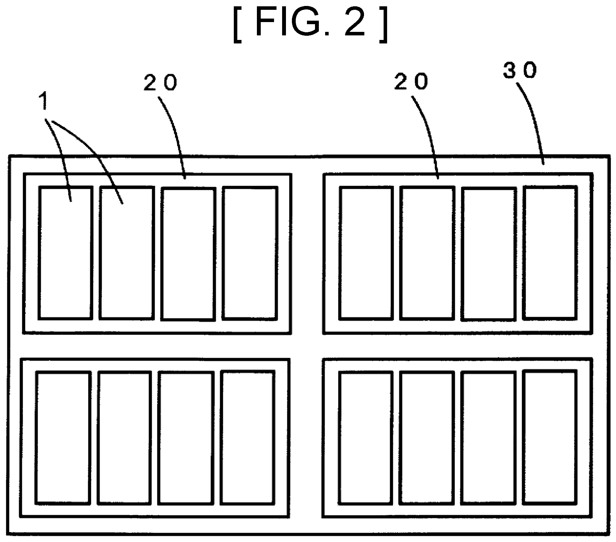

FIG. 2 illustrates an example of an energy storage apparatus 30 in which energy storage units 20, which are each configured by assembling two or more electrically connected non-aqueous electrolytic solution energy storage devices 1, are further assembled. The energy storage apparatus 30 may include a bus bar (not illustrated) that electrically connects two or more non-aqueous electrolytic solution energy storage devices 1, a bus bar (not illustrated) that electrically connects two or more energy storage units 20, and the like. The energy storage unit 20 or the energy storage apparatus 30 may include a state monitoring apparatus (not illustrated) which monitors the state of one or more non-aqueous electrolytic solution energy storage devices.

### <Method for Manufacturing Non-aqueous Electrolytic Solution Energy Storage Device>

A method for manufacturing the non-aqueous electrolytic solution energy storage device of the present embodiment can be selected as appropriate from known methods. The method for manufacturing includes, for example, preparing an electrode body, preparing a non-aqueous electrolytic solution, and accommodating the electrode body and the non-aqueous electrolytic solution in a container. Preparing the electrode body includes preparing a positive electrode and a negative electrode, and forming the electrode body by stacking or winding the positive electrode and the negative electrode with a separator interposed therebetween.

Preparing the positive electrode can be performed by, for example, applying a positive electrode mixture paste to a positive electrode substrate directly or via an intermediate layer and drying the positive electrode mixture paste. The positive electrode mixture paste contains ingredients for constituting the positive electrode active material layer, such as a positive electrode active material, and a dispersion medium. After the applied positive electrode mixture paste has been dried, pressing or the like may be performed.

Preparing the negative electrode can be performed by, for example, applying a negative electrode mixture paste to a negative electrode substrate directly or via an intermediate layer and drying the negative electrode mixture paste. The negative electrode mixture paste contains ingredients for constituting the negative electrode active material layer, such as a negative electrode active material, and a dispersion medium. After the applied negative electrode mixture paste has been dried, pressing or the like may be performed.

Accommodating the non-aqueous electrolytic solution in the container can be selected as appropriate from known methods. For example, the non-aqueous electrolytic solution may be injected through an inlet formed in the container, and then the inlet may be sealed.

The method for manufacturing the non-aqueous electrolytic solution energy storage device may include: performing an initial charge and discharge for the assembled non-aqueous electrolytic solution energy storage device which has not yet been charged and discharged; and performing an aging treatment after the initial charge and discharge. As the initial charge and discharge, charge and discharge can be performed once or a plurality of times. By the initial charge and the aging treatment, a part of the first additive and the like in the non-aqueous electrolytic solution accommodated in the container is decomposed, and a coating is formed on the surface of the negative electrode active material layer.

### <Other Embodiments>

The non-aqueous electrolytic solution energy storage device according to the present invention is not limited to the above-described embodiment, and various alterations may be made within a range that does not depart from the gist of the present invention. For example, in a configuration of one embodiment, a configuration of another embodiment may be added, or a part of the configuration of the one embodiment may be replaced with the configuration of the other embodiment or with a well-known technique. Further, a part of the configuration of the one embodiment may be deleted. Furthermore, a well-known technique may be added to the configuration of the one embodiment.

In the above-described embodiment, the case where the non-aqueous electrolytic solution energy storage device is used as a chargeable and dischargeable non-aqueous electrolytic solution secondary battery (a lithium-ion secondary battery) has been described. However, the non-aqueous electrolytic solution energy storage device may be of any type, shape, size, and capacity. The present invention can also be applied to various secondary batteries and capacitors such as an electric double layer capacitor or a lithium-ion capacitor.

In the above-described embodiment, the electrode body in which the positive electrode and the negative electrode are stacked with the separator interposed therebetween has been described. However, the electrode body may not include a separator. For example, the positive electrode and the negative electrode may be in contact with each other directly in such a state that a layer having no conductivity is formed on the active material layer of the positive electrode or the negative electrode.

### EXAMPLES

The present invention will be more specifically described with reference to Examples, but the present invention is not limited to the Examples described below.

### [Example 1]

### (Fabrication of positive electrode)

A positive electrode active material composed of particles of LiNi_{1/3}Mn_{1/3}Co_{1/3}O₂ with a tungsten oxide attached to a surface of the particles was prepared. The content of tungsten element relative to transition metal elements other than the tungsten element in this positive electrode active material was 1 mol%.

A positive electrode mixture paste was prepared by using the above-mentioned positive electrode active material, acetylene black (AB) as a conductive agent, polyvinylidene fluoride (PVDF) as a binder, and N-methylpyrrolidone (NMP) as a dispersion medium. A mass ratio of the positive electrode active material, AB, and PVDF was 93:5:2 (in terms of solid content). The positive electrode mixture paste was applied to both surfaces of an aluminum foil as the positive electrode substrate such that the mass of application (mass of the solid content) amounts to 6 mg/cm², and then dried. Then, roll-pressing was performed to obtain a positive electrode in which a positive electrode active material layer was stacked on the both surfaces of the positive electrode substrate.

### (Fabrication of negative electrode)

Natural graphite was prepared as a negative electrode active material.

A negative electrode mixture paste was prepared by using the above-mentioned negative electrode active material, styrene-butadiene rubber (SBR) as a binder, carboxymethyl cellulose (CMC) as a thickener, and water as a dispersion medium. A mass ratio of the negative electrode active material, SBR, and CMC was 98.5:1:0.5 (in terms of solid content). The negative electrode mixture paste was applied to both surfaces of a copper foil as the negative electrode substrate such that the mass of application (mass of the solid content) amounts to 4 mg/cm², and then dried. Then, roll-pressing was performed to obtain a negative electrode in which a negative electrode active material layer was stacked on the both surfaces of the negative electrode substrate. The BET specific surface area of the negative electrode active material layer was 4.0 g/m² and a surface area was 89.3 m².

### (Preparation of non-aqueous electrolytic solution)

In a non-aqueous solvent in which ethylene carbonate and ethyl methyl carbonate were mixed at a volume ratio of 30:70, LiPF₆ was dissolved at a concentration of 1.2 mol/dm³, lithium bis(oxalate)borate (LiBOB: reductive decomposition potential of 1.70 V (vs. Li/Li⁺)) as the first additive was dissolved at a concentration of 0.5% by mass, and vinylene carbonate (VC: reductive decomposition potential of 0.64 V (vs. Li/Li⁺)) as the second additive was dissolved at a concentration of 0.2% by mass, respectively, to prepare a non-aqueous electrolytic solution.

### (Separator)

A polyolefin microporous film was used as a separator.

### (Assembly of non-aqueous electrolytic solution energy storage device)

The positive electrode, the negative electrode, and the separator described above were used to obtain a wound type electrode body. The electrode body was accommodated in a container, and a non-aqueous electrolytic solution was injected to obtain a non-aqueous electrolytic solution energy storage device which has not yet been charged and discharged.

For the obtained non-aqueous electrolytic solution energy storage device which has not yet been charged and discharged, a constant current charge was performed at a current of 1.0 C in a constant-temperature bath at 25 °C to set the state of charge (SOC) to 80%. After that, an aging treatment was carried out in a constant-temperature bath at 45 °C. The time for performing the aging treatment was set to 15 hours. After performing the aging treatment, a constant current-constant voltage charge was performed in a constant-temperature layer at 25 °C under the conditions in which the charging current was 1.0 C, and the charge cutoff voltage was 4.1 V, until the time for performing the charge reached three hours in total. Next, a constant current discharge was performed under the conditions in which the discharge current was 1.0 C and the discharge cutoff voltage was 3.0 V, whereby a non-aqueous electrolytic solution energy storage device of Example 1 was obtained.

### [Example 2]

A non-aqueous electrolytic solution energy storage device of Example 2 was obtained in the same manner as in Example 1 except that the temperature of the aging treatment was changed to 65 °C.

### [Example 3]

A non-aqueous electrolytic solution energy storage device of Example 3 was obtained in the same manner as in Example 1 except that the temperature of the aging treatment was changed to 70 °C.

### [Comparative Examples 1 and 2]

Non-aqueous electrolytic solution energy storage devices of Comparative Examples 1 and 2 were obtained in the same manner as in Example 1 except that natural graphite different from that of Example 1 and the like was used as the negative electrode active material, the BET specific surface area and the surface area of the negative electrode active material layer were set to values indicated in Table 1, and LiBOB and VC were dissolved at concentrations (feed values) indicated in Table 1 to prepare the non-aqueous electrolytic solution.

### [Reference Example 1]

A non-aqueous electrolytic solution energy storage device of Reference Example 1 was obtained in the same manner as in Comparative Example 1 except that LiNi_{1/3}Mn_{1/3}Co_{1/3}O₂ containing no tungsten element was used as the positive electrode active material.

As the non-aqueous electrolytic solution energy storage devices, two non-aqueous electrolytic solution energy storage devices were produced for each of the Examples, Comparative Examples, and Reference Example to use one of the two for measuring the amounts of the first additive and the second additive in the non-aqueous electrolytic solution in the obtained non-aqueous electrolytic solution energy storage device, and to use an other one of the two for evaluating the input retention rate exhibited after storage in a high-temperature environment.

### (Measurement of amount of substance of first additive and second additive with respect to surface area of negative electrode active material layer)

The amounts of substances of the first additive and the second additive in the non-aqueous electrolytic solution were measured by the method as described above for each of the obtained non-aqueous electrolytic solution energy storage devices, and the ratio (A1/B) of the amount of substance (A1) of the first additive contained in the non-aqueous electrolytic solution to the surface area (B) of the negative electrode active material layer, and the ratio (A2/B) of the amount of substance (A2) of the second additive contained in the non-aqueous electrolytic solution to the surface area (B) of the negative electrode active material layer were obtained. Also, the ratio (A1/A2) of the amount of substance (A1) of the first additive to the amount of substance (A2) of the second additive contained in the non-aqueous electrolytic solution was obtained. Table 1 shows the obtained values of the ratio (A1/B), the ratio (A2/B), and the ratio (A1/A2).

### [Evaluation]

### (1) Measurement of initial input

For each of the obtained non-aqueous electrolytic solution energy storage devices, a constant current charge was performed at a current of 1.0 C in a constant-temperature bath at 25 °C to set the SOC to 50%. Then, after storing the non-aqueous electrolytic solution energy storage devices in the constant-temperature bath at -10 °C for 4 hours, charges were performed for 30 seconds at constant currents of 5 C, 10 C, 15 C, 20 C, and 25 C, respectively. After completion of each charge, a constant current discharge was performed at a current of 1.0 C to decrease the SOC to 50%. The relationship between the current and the voltage indicated after 10 seconds from a start of the charge in each charge was plotted, and a direct-current (DC) resistance was obtained from the slope of a straight line acquired from the plotted five points. From the obtained DC resistance, an input indicated after 10 seconds from the start of the charge was calculated and assumed as an initial input.

(2) Measurement of input after storage in high-temperature environment Next, for each of the non-aqueous electrolytic solution energy storage devices, a constant current charge was performed at a current of 1.0 C in the constant-temperature bath at 25 °C to set the SOC to 80%. In a state where the SOC is 80%, each of the non-aqueous electrolytic solution energy storage devices was stored in the constant temperature bath at 70 °C for 60 days. After that, each of the non-aqueous electrolytic solution energy storage devices was stored in the constant temperature bath at 25 °C for 3 hours or more, and a constant current discharge was performed at a current of 1.0 C, with the discharge cutoff voltage set to 3.0 V. After that, an input indicated after 10 seconds from a start of a charge was obtained by the same method as that of the above "Measurement of initial input", and was assumed as an input after storage in a high-temperature environment. A percentage of the input after storage in a high-temperature environment relative to the initial input was obtained as the input retention rate. The obtained input retention rate of each of the non-aqueous electrolytic solution energy storage devices is indicated in Table 1 as a relative value with reference to the value of Example 2 (set as 100%).

**[Table 1]**

| | Positive electrode active material | Negative electrode active material layer | | Used non-aqueous electrolytic solution | | Non-aqueous electrolytic solution energy storage device | | | Evaluation |
|---|---|---|---|---|---|---|---|---|---|
| | Presence or absence of W | BET specific surface area /m² g⁻¹ | Surface area /m² | LiBOB | VC | Ratio (A1/B) | Ratio (A2/B) | Ratio (A1/A2) | Input retention rate (relative value) /% |
| | | | | Concentration (feed value) /mass% | Concentration (feed value) /mass% | | | | |
| Example 1 | Present | 4.0 | 89.3 | 0.5 | 0.2 | 3.0.E-06 | 5.7.E-06 | 0.53 | 104 |
| Example 2 | Present | 4.0 | 89.3 | 0.5 | 0.2 | 7.5.E-07 | 5.7.E-06 | 0.13 | 100 |
| Example 3 | Present | 4.0 | 89.3 | 0.5 | 0.2 | 1.3.E-06 | 5.7.E-06 | 0.22 | 101 |
| Comparative Example 1 | Present | 5.6 | 124.1 | 0.2 | 0.5 | 0.0.E+00 | 4.7.E-06 | 0.00 | 81 |
| Comparative Example 2 | Present | 4.6 | 102.9 | 0.2 | 0.5 | 1.2.E-07 | 4.3.E-06 | 0.03 | 90 |
| Reference Example 1 | Absent | 5.6 | 124.1 | 0.2 | 0.5 | 1.4.E-07 | 4.4.E-06 | 0.03 | 99 |

As indicated in Table 1, in each of the non-aqueous electrolytic solution energy storage devices of Comparative Examples 1 and 2 in which the positive electrode active material contains a tungsten element, and the ratio (A1/B) is less than 2.0×10⁻⁷ mol/m², the input retention rate (relative value) was 90% or less, and the input retention rate exhibited after storage in a high-temperature environment was low. In contrast, in each of the non-aqueous electrolytic solution energy storage devices of Examples 1 to 3 in which the positive electrode active material contains a tungsten element, and the ratio (A1/B) is not less than 2.0×10⁻⁷ mol/m², the input retention rate (relative value) was 100% or more, and the input retention rate exhibited after storage in a high-temperature environment was high. In each of the non-aqueous electrolytic solution energy storage devices of Examples 1 to 3, as the ratio (A1/B) increased, the input retention rate exhibited after storage in a high-temperature environment increased. From this result, it can be said that the ratio (A1/B) of the amount of substance (A1) of the first additive to the surface area (B) of the negative electrode active material layer greatly contributes to the improvement in the input retention rate exhibited after storage in a high-temperature environment.

Further, in the non-aqueous electrolytic solution energy storage device of Reference Example 1 in which the positive electrode active material contains no tungsten element, the input retention rate exhibited after storage in a high-temperature environment was not low even though the ratio (A1/B) was less than 2.0×10⁻⁷ mol/m². It has been confirmed that the phenomenon of a decrease in the input after storage in a high-temperature environment is a phenomenon that occurs remarkably in a non-aqueous electrolytic solution energy storage device in which a positive electrode active material contains a tungsten element.

### INDUSTRIAL APPLICABILITY

The present invention can be applied to non-aqueous electrolytic solution energy storage devices and the like which are used as power sources of electronic devices such as personal computers or communication terminals, automobiles, and the like.

### DESCRIPTION OF REFERENCE NUMERALS

1 Non-aqueous electrolytic solution energy storage device
2 Electrode body
3 Container
4 Positive electrode terminal
41 Positive electrode lead
5 Negative electrode terminal
51 Negative electrode lead
20 Energy storage unit
30 Energy storage apparatus

## Claims

1. A non-aqueous electrolytic solution energy storage device comprising:
an electrode body including a positive electrode and a negative electrode;
a non-aqueous electrolytic solution; and
a container accommodating therein the electrode body and the non-aqueous electrolytic solution, wherein
the positive electrode includes a positive electrode active material layer containing a positive electrode active material,
the negative electrode includes a negative electrode active material layer containing a negative electrode active material,
the positive electrode active material contains a tungsten element,
the negative electrode active material contains graphite,
the non-aqueous electrolytic solution contains a first additive having a reductive decomposition potential of 1.5 V (vs. Li/Li⁺) or more, and
a ratio (A1/B) of an amount of substance (A1) of the first additive contained in the non-aqueous electrolytic solution to a surface area (B) of the negative electrode active material layer is 2.0×10⁻⁷ mol/m² or more.

2. The non-aqueous electrolytic solution energy storage device according to claim 1, wherein the ratio (A1/B) is 5.0×10⁻⁶ mol/m² or less.

3. The non-aqueous electrolytic solution energy storage device according to claim 1 or 2, wherein the graphite is natural graphite.

4. The non-aqueous electrolytic solution energy storage device according to claim 1 or 2, wherein the non-aqueous electrolytic solution contains a second additive having a reductive decomposition potential of 0.6 V (vs. Li/Li⁺) or more but less than 1.5 V (vs. Li/Li⁺).

5. The non-aqueous electrolytic solution energy storage device according to claim 4, wherein a ratio (A2/B) of an amount of substance (A2) of the second additive contained in the non-aqueous electrolytic solution to the surface area (B) of the negative electrode active material layer is 5.0×10⁻⁶ mol/m² or more and 1.0×10⁻⁵ mol/m² or less.

6. The non-aqueous electrolytic solution energy storage device according to claim 4, wherein a ratio (A1/A2) of the amount of substance (A1) of the first additive to an amount of substance (A2) of the second additive contained in the non-aqueous electrolytic solution is 0.05 or more and 1 or less.
